# EUROPEAN PATENT APPLICATION

(11) **EP 4 516 444 A2**
(43) Date of publication of application: **05.03.2025**
(21) Application number: 24178150.9
(22) Date of filing: 27.05.2024
(51) Int. Cl.: B23P 6/00, B23K 1/00, B23K 35/30, F01D 5/00

(54) **METHOD FOR REPAIRING WIDE CRACK IN HOT GAS PATH PART FOR GAS TURBINE USING BRAZING**

(30) Priority: 28.08.2023 KR 20230112826
(71) Applicant: Turbo Powertech Co., Ltd., Busan (KR)
(72) Inventor: KANG, Hyun Ki, Busan (KR); CHUNG, Taek Ho, Busan (KR); BYUN, Sam Sub, Busan (KR); LEE, Jong Yeob, Busan (KR); SON, Jae Wha, Busan (KR)
(74) Representative: Cabinet Chaillot

(57) **Abstract**

The present invention relates to a method for repairing a wide crack in a hot gas path part for a gas turbine using brazing, the method including the steps of removing oxides (40) from the inside of the wide crack (11) of the hot gas path part (10), filling base metal powder (20) and a filler (30) into the wide crack from which the oxides have been removed, and bonding the wide crack by means of the brazing.

## Description

### BACKGROUND OF THE INVENTION

### Field of the invention

The present invention relates to a method for repairing a wide crack in a hot gas path part for a gas turbine, more specifically to a method for repairing a wide crack in a hot gas path part for a gas turbine using brazing.

### Background of the Related Art

Generally, since a hot gas path part of a gas turbine operates on severe conditions of high temperature and high pressure, especially at a high turbine inlet temperature (TIT) in the range of 1100 to 1600°C for long hours, the hot gas path part may be deteriorated due to thermal vibration fatigue and high temperature creep, and accordingly, the hog gas path part is made of superalloys having excellent mechanical properties at a high temperature and high creep, corrosion and oxidation resistance.

As the superalloys, Hastelloy, IN 738, IN 792, IN 939, Rene 41, Rene 45, Rene 71, Rene 80, Rene 142, Mar M247, CM247, ECY 768, CMSX-4, etc. are used.

As the hot gas path part of the gas turbine operates at a high temperature (in the range of 1100 to 1600°C) and high pressure for long hours, the hot gas path part may be deteriorated due to thermal vibration fatigue, so that the hog gas path part may be cracked or partially broken to cause a serious damage.

To repair the crack or damage of the hot gas path part, welding and brazing are selectively applied.

In the case of arc welding for the hot gas path part of the gas turbine, a portion of a base metal is melted, so that heat input becomes increased to cause cracks or deformation on the base metal, whereas in the case of brazing, a filler, not the base metal, is melted so that no deformation and cracks occur on the base metal and mass repairing is possible to allow a repair cost to be reduced to 40 to 60% of the welding cost. Up to now, conventional methods for repairing the damage of the hot gas path part are carried out only when the crack is very narrow in width, and if the crack is relatively wide in width, accordingly, the hot gas path part is generally replaced with a new hot gas path part.

### Prior art literature

### Patent literature

(Patent literature 1) Korean Patent No. 10-2278835 (Entitled 'Method for manufacturing core plug of gas turbine vane using brazing' and issued on July 13, 2021)
(Patent literature 2) Korean Patent No. 10-2527964 (Entitled 'Hot gas path part repairing and thermal barrier coating using 3D printing' and issued on April 26, 2023)
(Patent literature 3) Korean Patent No. 10-1613152 (Entitled 'Braze alloy for hot brazing and method for repairing or manufacturing part using the same' and issued on April 11, 2016)
(Patent literature 4) Korean Patent No. 10-1613156 (Entitled 'Braze foil for hot brazing and method for repairing or manufacturing part using the same' and issued on April 11, 2016)

### SUMMARY OF THE INVENTION

Accordingly, the present invention has been made in view of the above-mentioned problems occurring in the related art, and it is an object of the present invention to provide a method for repairing a wide crack in a hot gas path part for a gas turbine using brazing that is capable of applying wide crack brazing even if the wide crack occurs in the hot gas path part for the gas turbine, so that the hot gas path part with the crack is thrown away in the conventional practice, but according to the present invention, the hot gas path part is repaired and reused, thereby achieving enormous cost saving, production efficiency improvement, and repair time reduction.

To accomplish the above-mentioned object, according to the present invention, there is provided a method for repairing a wide crack in a hot gas path part for a gas turbine using brazing, the method including the steps of removing oxides from the inside of the wide crack of the hot gas path part; filling base metal powder having the same composition as the hot gas path part and a filler into the wide crack to a higher height than the surface of the hot gas path part, the filler comprising carbon in an amount of not more than 0.05% by weight, chromium in an amount of not more than 14% by weight, cobalt in an amount of not more than 0.5% by weight, tungsten in an amount of not more than 1.5% by weight, hafnium in an amount of not more than 0.5% by weight, aluminum in an amount of not more than 1% by weight, tantalum in an amount of not more than 0.5% by weight, silicon in an amount of not more than 4% by weight, and nickel as the remainder; and bonding the wide crack by means of the brazing. The wide crack has a width in the range of 0.2 to 1 mm, a mixing ratio of the base metal powder to the filler is 0 to 60 wt% : 40 to 100 wt%, while the filler being injected into the crack by means of an injector, the filler further comprises zirconium in an amount of 0.05% by weight, palladium in an amount of 5% by weight, manganese in an amount of 1% by weight, phosphorus in an amount of 0.04% by weight, beryllium in an amount of 3% by weight, and titanium in an amount of 3% by weight, and after the brazing, a bond coated layer and a thermal barrier coated layer are additionally formed.

### BRIEF DESCRIPTION OF THE DRAWINGS

The above and other objects, features and advantages of the present invention will be apparent from the following detailed description of the preferred embodiments of the invention in conjunction with the accompanying drawings, in which:

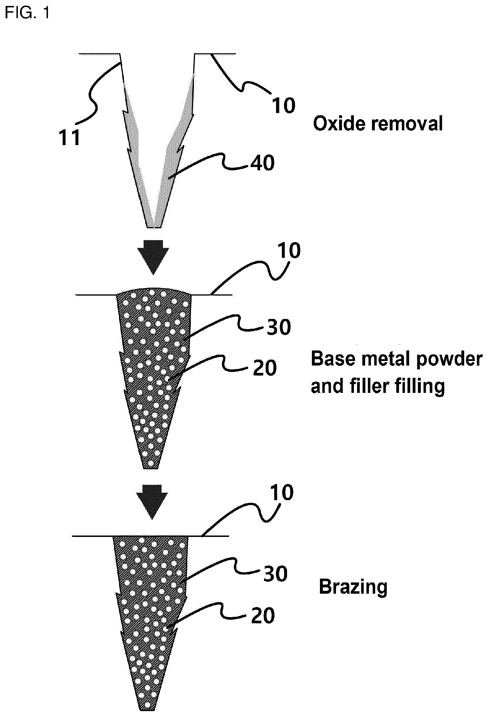

FIG. 1 is a flowchart showing a method for repairing a wide crack in a hot gas path part for a gas turbine using brazing according to the present invention.

### DETAILED DESCRIPTION OF THE PREFERRED EMBODIMENTS

The present invention relates to a method for repairing a wide crack in a hot gas path part for a gas turbine using brazing, the method including the steps of removing oxides from the inside of the wide crack of the hot gas path part, filling base metal powder and a filler into the wide crack from which the oxides have been removed, and bonding the wide crack by means of the brazing.

The wide crack has a width in the range of 0.2 to 1 mm.

Further, the base metal powder has the same composition as the hot gas path part.

The filler comprises carbon (C) in an amount of not more than 0.05% by weight, chromium (Cr) in an amount of not more than 14% by weight, cobalt (Co) in an amount of not more than 0.5% by weight, tungsten (W) in an amount of not more than 1.5% by weight, hafnium (Hf) in an amount of not more than 0.5% by weight, aluminum (Al) in an amount of not more than 1% by weight, tantalum (Ta) in an amount of not more than 0.5% by weight, silicon (Si) in an amount of not more than 4% by weight, and nickel (Ni) as the remainder.

Otherwise, the filler comprises carbon (C) in an amount of not more than 0.03% by weight, chromium (Cr) in an amount of not more than 30% by weight, nickel (Ni) in an amount of not more than 50% by weight, tungsten (W) in an amount of not more than 1% by weight, tantalum (Ta) in an amount of not more than 2.5% by weight, boron (B) in an amount of not more than 4% by weight, and a cobalt and nickel-based superalloy as the remainder.

A mixing ratio of the base metal powder to the filler is 0 to 60 wt% : 40 to 100 wt%.

Hereinafter, a method for repairing a wide crack in a hot gas path part for a gas turbine using brazing according to the present invention will be explained in detail with reference to the attached drawings.

FIG. 1 is a flowchart showing a method for repairing a wide crack in a hot gas path part for a gas turbine using brazing according to the present invention.

As shown in FIG. 1, a method for repairing a wide crack in a hot gas path part for a gas turbine using brazing according to the present invention includes the steps of removing oxides 40 from the inside of the wide crack 11 of the hot gas path part 10, filling base metal powder 20 and a filler 30 into the wide crack 11 from which the oxides 40 have been removed, and bonding the wide crack 11 by means of the brazing.

In detail, the oxides 40 produced inside the wide crack 11 of the hot gas path part 10 for the gas turbine are first removed.

The hot gas path part 10 is made of Inconel 939 (IN939).

Generally, welding and brazing are selectively used to repair the crack of the damaged hot gas path part 10. In this case, if metal oxides Al₂O₃, TiO₂, and Cr₂O₃ exist in the crack, brazing cannot be achieved, and accordingly, fluoride ion cleaning for removing the metal oxides is applied.

Chemical reactions for removing the metal oxides through the fluoride ion cleaning are as follows.

6HF + Al₂O₃ ↔ 2AlF₃ + 3H₂O

4HF + TiO₂ ↔ TiF₄ + 2H₂O

6HF + Cr₂O₃ ↔ 2CrF₃ + 3H₂O

4HF + NiO₂ ↔ NiF₄ + 2H₂O

6HF + Co₂O₃ ↔ 2CoF₃ + 3H₂O

4HF + SiO₂ ↔ SiF₄ + 2H₂O

The crack 11 has a width in the range of 0.2 to 1 mm, and therefore, the crack 11 is called wide crack.

In this case, the smallest width of the crack 11 is measured.

Next, the interior of the crack 11 from which the oxides 40 have been removed is filled with the base metal powder 20 and the filler 30.

In this case, the base metal powder 20 has the same composition as the hot gas path part 10.

The filler 30 comprises carbon (C) in an amount of not more than 0.05% by weight, chromium (Cr) in an amount of not more than 14% by weight, cobalt (Co) in an amount of not more than 0.5% by weight, tungsten (W) in an amount of not more than 1.5% by weight, hafnium (Hf) in an amount of not more than 0.5% by weight, aluminum (Al) in an amount of not more than 1% by weight, tantalum (Ta) in an amount of not more than 0.5% by weight, silicon (Si) in an amount of not more than 4% by weight, and nickel (Ni) as the remainder.

Otherwise, the filler 30 comprises carbon (C) in an amount of not more than 0.03% by weight, chromium (Cr) in an amount of not more than 30% by weight, nickel (Ni) in an amount of not more than 50% by weight, tungsten (W) in an amount of not more than 1% by weight, tantalum (Ta) in an amount of not more than 2.5% by weight, boron (B) in an amount of not more than 4% by weight, and a cobalt and nickel-based superalloy as the remainder.

In this case, the filler 30 further comprises zirconium (Zr) in an amount of not more than 0.05% by weight to enhance corrosion resistance and palladium (Pd) in an amount of 5% by weight to provide high corrosion and wear resistance. Otherwise, the filler further comprises manganese (Mn) in an amount of 1% by weight and phosphorus (P) in an amount of 0.04% by weight to enhance reactions between metals and beryllium (Be) in an amount of 3% by weight and titanium (Ti) in an amount of 3% by weight to provide high strength and high temperature resistance.

All or one or more of the metals added may be selected.

The filler 30 is injected into the crack 11 by means of an injector.

Upon the filling, the base metal powder 20 and the filler 30 are filled inside the crack 11 to a higher height than the surface of the hot gas path part 10.

After the base metal powder 20 and the filler 30 have been filled inside the crack 11, the crack 11 is bonded by means of brazing.

A mixing ratio of the base metal powder 20 to the filler 30 is 0 to 60 wt% : 40 to 100 wt%.

Through the brazing, the brazed layer has a thickness of 5 to 200 µm of the surface of the hot gas path part 10.

After the brazing, a bond coated layer and a thermal barrier coated layer are additionally formed.

The bond coated layer is formed to a thickness of 50 to 2,000 µm using conventional high heat resistant powder (MCrAlY (M = Ni, Co)).

Further, the thermal barrier coated layer is formed on top of the bond coated layer using widely known YSZ powder by means of laser cladding, while ultrasonic vibrations and far infrared heating are being applied thereto.

The thermal barrier coated layer is located on the uppermost surface of the bonded layer, which is called top coated layer, and in this case, the thermal barrier coated layer has a thickness of 0.5 to 5 mm. In detail, the ultrasonic vibrations are applied to the thermal barrier coated layer to the thickness of 5 to 50 µm when the thermal barrier coated layer is laminated initially onto top of the bond coated layer, so that no pores are formed on the coated layer to improve the bonding force to the bond coated layer.

Desirably, the ultrasonic vibrations are applied in the range of 1 KHz to 100 MHz, and the far infrared heating is applied with the wavelength of 10 to 1000 µm so that while the hot gas path part as a base metal is being kept to a temperature in the range of 400 to 1000°C, the laser cladding is performed.

If the laser cladding is performed together with the ultrasonic vibrations, porosity of the bonded portion is reduced to 0.01% or under and a grain size of the bonded portion is less than 50% of the grain size in the existing laser cladding, thereby advantageously improving mechanical properties (hardness, strength, wear, and fatigue).

After the thermal barrier coated layer has been formed, further, a diffusion heat treatment (solution heat treatment) is additionally performed.

The diffusion heat treatment (solution heat treatment) is performed at a temperature of 1200 to 1450°C for 30 to 60 minutes, and next, after the temperature falls to a temperature of 1023 to 1350°C, the diffusion heat treatment is performed at a vacuum state for 150 to 255 minutes.

As described above, the wide crack brazing is applied even if a wide crack occurs in the hot gas path part for the gas turbine, so that the hot gas path part with the crack is thrown away in the conventional practice, but according to the present invention, the hot gas path part is repaired and reused, thereby achieving enormous cost saving, production efficiency improvement, and repair time reduction.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A method for repairing a wide crack in a hot gas path part for a gas turbine using brazing, the method comprising the steps of:
removing oxides (40) from the inside of the wide crack (11) of the hot gas path part (10);
filling base metal powder (20) having the same composition as the hot gas path part (10) and a filler (30) into the wide crack (11) to a higher height than the surface of the hot gas path part (10), the filler (30) comprising carbon (C) in an amount of not more than 0.05% by weight, chromium (Cr) in an amount of not more than 14% by weight, cobalt (Co) in an amount of not more than 0.5% by weight, tungsten (W) in an amount of not more than 1.5% by weight, hafnium (Hf) in an amount of not more than 0.5% by weight, aluminum (Al) in an amount of not more than 1% by weight, tantalum (Ta) in an amount of not more than 0.5% by weight, silicon (Si) in an amount of not more than 4% by weight, and nickel (Ni) as the remainder; and
bonding the wide crack (11) by means of the brazing,
wherein the wide crack (11) has a width in the range of 0.2 to 1 mm, a mixing ratio of the base metal powder (20) to the filler (30) is 0 to 60 wt% : 40 to 100 wt%, while the filler (30) being injected into the crack (11) by means of an injector, the filler (30) further comprises zirconium (Zr) in an amount of 0.05% by weight, palladium (Pd) in an amount of 5% by weight, manganese (Mn) in an amount of 1% by weight, phosphorus (P) in an amount of 0.04% by weight, beryllium (Be) in an amount of 3% by weight, and titanium (Ti) in an amount of 3% by weight, and after the brazing, a bond coated layer and a thermal barrier coated layer are additionally formed.

2. The method according to claim 1, wherein the filler (30) comprises carbon (C) in an amount of not more than 0.03% by weight, chromium (Cr) in an amount of not more than 30% by weight, nickel (Ni) in an amount of not more than 50% by weight, tungsten (W) in an amount of not more than 1% by weight, tantalum (Ta) in an amount of not more than 2.5% by weight, boron (B) in an amount of not more than 4% by weight, and a cobalt and nickel-based superalloy as the remainder.
